# EUROPEAN PATENT SPECIFICATION

(11) **EP 1 037 180 B1**
(45) Date of publication and mention of the grant of the patent: **19.07.2006**
(21) Application number: 00302085.6
(22) Date of filing: 15.03.2000
(51) Int. Cl.: G07F 19/00, G07F 7/08, G07F 17/16, G07F 17/32

(54) **Electronic settlement system, transaction card, transaction terminal, transaction management terminal, and automatic prepayment transaction terminal**
Elektronisches Begleichungsverfahren, Transaktionskarte, Transaktionsendgerät, Transaktionsverwaltungsendgerät und automatisches Vorrausbezahlungstransaktionsendgerät
Système de règlement électronique, carte de transaction, terminal de gestion de transaction, et terminal automatique de transaction de prépaiement

(30) Priority: 18.03.1999 JP 7410999
(43) Date of publication of application: 20.09.2000
(73) Proprietor: Sony Computer Entertainment Inc., Tokyo 107-0052 (JP)
(72) Inventor: Ito, Takeshi, c/o Sony Computer Entertainment Inc., Tokyo 107-0052 (JP)
(74) Representative: Horner, David Richard

(56) References cited:
- EP-A- 0 764 911
- EP-A- 0 793 205
- EP-A- 0 865 008
- US-A- 4 673 802
- US-A- 5 484 988

## Description

The present invention relates to an electronic settlement system for use with a network, for example a broadcast network, a communication network, a circuit network, etc.

When the user (customer) wants to download contents from a content provider such as a content dealer or the like via a network into the user's computer terminal and electronically settle the charge for the contents, it has heretofore been customary for the user to use a credit card or a prepaid card.

If the user uses a credit card, then the user selects desired contents in the home page of the content provider and enters the credit card number from the computer terminal, after which the user can download the desired content into the computer terminal.

Similarly, if the user uses a prepaid card, then the user selects desired contents in the home page of the content provider and enters the prepaid card number from the computer terminal, after which the user can download the desired content into the computer terminal.

However, the electronic settlement for the charge for contents using a credit card is dangerous from the standpoint of security because the user is required to send the credit card number over the network. Manually entering the credit card number is tedious and time-consuming. In addition, those people who can use credit cards are limited to persons who have jobs, and children and those who have no jobs are excluded from credit card services.

Using prepaid cards is advantageous in that even if the card number of a prepaid card is leaked out and the prepaid card is used by an unauthorized person, any damage caused by the unauthorized use is limited to the amount of money which has been prepaid, at maximum. However, entering the prepaid card number is also tedious and time-consuming because the user needs to manually enter the card number printed on the prepaid card. Furthermore, the prepaid cards are not preferable from a resource protection viewpoint for the reason that the cost of recycling them is high.

United States Patent No US-A-4 673 802 discloses a transaction payment system comprising a network, a bank card having an inherent identification code written therein, a transaction terminal having a card insertion unit, a reader for reading said inherent identification code, and a network connector, for reading said inherent identification code from said card via said card insertion unit with said reader, and sending the inherent identification code via said network connector to said network, and a transaction management terminal connected to said network, for accessing a database containing a balance corresponding to said inherent identification code, the arrangement being such that when said network is accessed via said transaction terminal with said bank card inserted in said card insertion unit, said transaction management terminal updates the balance recorded in said database with respect to the inherent identification code of said bank card depending on a transaction charge.

European Patent Application Publication No EP-A-0 865 008 discloses an automatic prepayment transaction terminal connected via a network to a transaction management terminal for managing a balance after an electronic settlement, comprising an electronic money smart card on which an inherent identification code is written, a reader for reading the inherent identification code of the smart card loaded in said card loading unit, and a balance updating confirming unit for confirming the updating of a balance, the arrangement being such that when said prepayment confirming unit confirms the prepayment of a charge, said reader reads the inherent identification code of the smart card loaded in said card loading unit, said automatic prepayment transaction terminal communicates with said transaction management terminal via the network, and sends a request to said transaction management terminal to update the balance for the read inherent identification code depending on the prepaid charge in said database, and when the updating of the balance is indicated by said transaction management terminal, said balance updating confirming unit confirms the indicated updating of the balance.

United States Patent No US-A-5 557 086 discloses a game machine system comprising a group of game machines (of the type that are usually coin-operated in a games arcade) locally networked with one another in the arcade. Each of the game machines includes a reading device for reading an encoded user card, a display for displaying a credit value read from the encoded user card, a safe-like housing structurally separate from the game machines, and a computer-controlled money processing device disposed in the housing and networked with the game machines. The money processing device includes a money deposit unit, a money storage device, a stock of user cards in the form of chip cards each having a non volatile chip memory and being value coded, an encoding device for encoding each of the user cards with the credit value belonging to an corresponding user, an acquisition unit for acquiring money deposited through the money deposit unit and allocating the credit value belonging to the corresponding user to both the storage device and the encoding device, a card dispenser, a releasing device for releasing a selected one of the game machines into which an encoded user card has been received, and a checking device for cyclically updating playing data including game statistics and credit values.

The present invention provides an electronic settlement system as set forth in claim 1 hereof.

A preferred implementation of the invention described hereinbelow does not require the user to enter a card number, can be used by almost anybody without user limitations, and allows low-cost card recycling.

With the system of the invention, since the inherent identification code written in the transaction card is read by an identification code reader of the transaction terminal, the user does not need to manually enter the inherent identification code. Since the transaction card can be owned by even a child, almost anybody can electronically settle charges on the network.

When the prepayment confirming unit of the automatic prepayment transaction terminal of the system confirms the prepayment of a charge, the reader reads the inherent identification code of the transaction card loaded in the transaction card loading unit, the automatic prepayment transaction terminal communicates with the transaction management terminal via the network, and sends a request to the transaction management terminal to update the balance for the read inherent identification code depending on the prepaid charge in the database. Therefore, the transaction card can be refilled, or stated otherwise, can be recycled.

The transaction card is preferably provided with a storage unit recording the inherent identification code of the transaction card therein. The balance corresponding to a charge prepaid with respect to the inherent identification code is recorded in the database. Since the balance is not stored in the storage unit of the transaction card, the balance of the transaction card cannot be tampered with in principle.

The transaction terminal makes it unnecessary for the user to manually enter the inherent identification code.

The transaction terminal may have a program storage unit, the arrangement such that a program functioning as a reader for reading the inherent identification code is downloaded from an external source into the program storage unit.

The transaction terminal may comprise an entertainment apparatus capable of executing a program based on a command from a manual controller.

In the system of the invention, when the transaction card is removed from the transaction card loading unit of the automatic prepayment transaction terminal and thereafter inserted into a transaction terminal, the transaction terminal is rendered capable of performing an electronic transaction based on the updated balance via the network.

Consequently, the transaction card can be recycled.

The present invention will be described further, by way of example only, with reference to preferred embodiments thereof as illustrated in the accompanying drawings, in which:
FIG. 1 is a schematic perspective view of a physical layout of an electronic settlement system according to an embodiment of the present invention;
FIG. 2 is a block diagram of an electric circuit of the electronic settlement system shown in FIG. 1;
FIG. 3 is a block diagram of a transaction card;
FIG. 4 is a block diagram of a manual controller;
FIG. 5 is a perspective view of a transaction terminal in use;
FIG. 6 is a block diagram of an electric circuit of a memory card;
FIG. 7 is a block diagram of an electric circuit of the transaction terminal;
FIG. 8 is a diagram showing details of a balance database by way of example;
FIG. 9 is a block diagram of an electric circuit of a transaction card processor;
FIG. 10 is a flowchart of an operation sequence of the electronic settlement system; and
FIG. 11 is a flowchart of a process of issuing a transaction card.

### DESCRIPTION OF THE PREFERRED EMBODIMENT

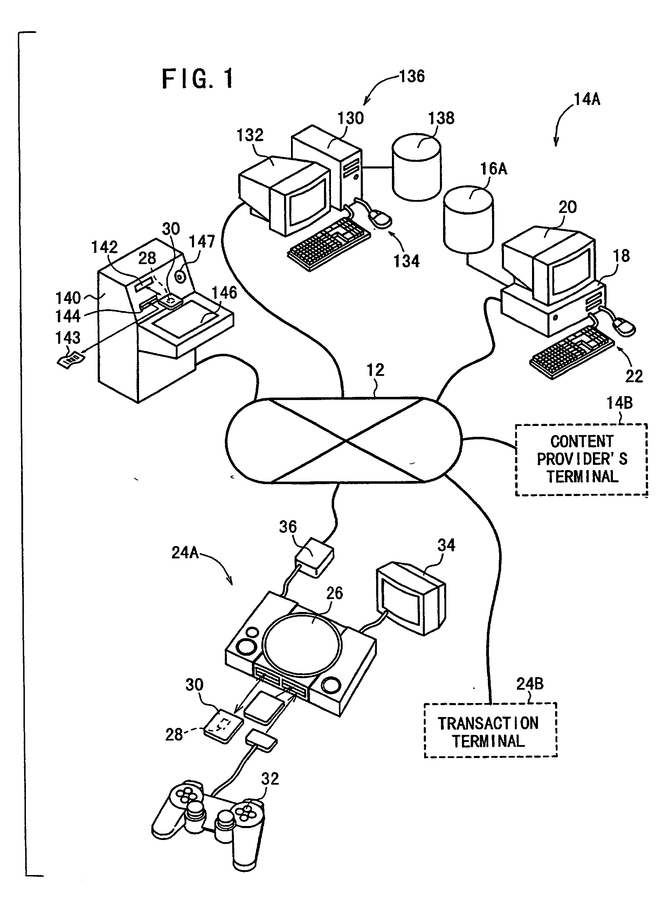

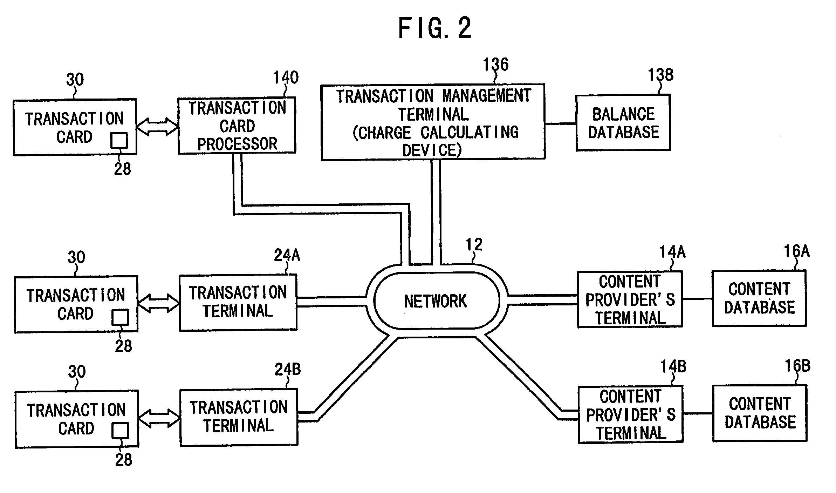

FIG. 1 shows in perspective a physical layout of an electronic settlement system 10 according to an embodiment of the present invention, and FIG. 2 shows in block form an electric circuit of the electronic settlement system 10.

As shown in FIGS. 1 and 2, the electronic settlement system 10 uses a network 12 such as a broadcast network, a communication network, a circuit network, the Internet, etc.

To the network 12, there are connected a plurality of terminals 14 (14A, 14B in FIGS. 1 and 2) of content providers such as content dealers or the like. Content databases 16A, 16B (collectively 16) in which contents are recorded as data are connected respectively to the content provider's terminals 14A, 14B.

As shown in FIG. 1, each of the content provider's terminals 14 comprises a computer 18 as a processor, a display unit 20, and an input device 22 including a mouse and a keyboard.

The term "content" used herein represents various information including pictures, images including moving and still images, sounds, letters, numerals, etc., and covers programs and commercials played back by television receivers and radio receivers, articles on magazines and newspapers, game software, etc.

To the network 12, there are also connected a plurality of transaction terminals 24 (24A, 24B in FIGS. 1 and 2) also functioning as electronic transaction terminals for downloading content data from the content provider's terminals 14. As shown in FIG. 1, each of the transaction terminals 24 has a transaction terminal unit 26 to which there are connected a transaction card 30 having a storage unit (storage medium or storage device) 28 and a manual controller 32. A display monitor 34 such as a television receiver is connected to the transaction terminal unit 26. A network connection device (network connector) 36 such as a modem or the like is connected between the transaction terminal unit 26 and the network 12.

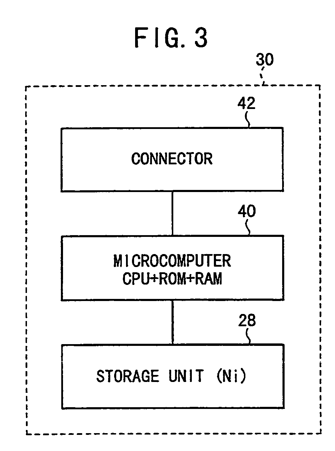

FIG. 3 shows in block form an electric circuit of the transaction card 30. The storage unit 28 of the transaction card 30 comprises a flash memory having a data storage capacity ranging from 1 kilobits to several kilobits. The storage unit 28 stores different inherent identification codes (identification numbers) Ni of the respective transaction cards 30.

In the illustrated embodiment, the storage unit 28 only stores identification codes Ni, but not values (balances) as with electronic money. The inherent identification codes Ni may be encrypted, if necessary.

The storage unit 28 is connected to a microcomputer 40 as a control device (controller). The microcomputer 40 has a CPU, a ROM, a RAM, etc., and includes a unit connection interface for connecting the transaction card 30 to the transaction terminal unit 26 via a physical connector 42 and a memory interface for connection to the storage unit 28.

It is assumed that transaction cards 30 with respective inherent identification codes Ni stored in their storage units 28 have been issued from a transaction management terminal 136 (see FIGS. 1 and 2), described later on, and sold to users by various shops. Since the transaction card 30 has such a structure that the storage unit 28, the microcomputer 40, and the connector 42 are held together by a casing, the transaction card 30 can be manufactured at a low cost.

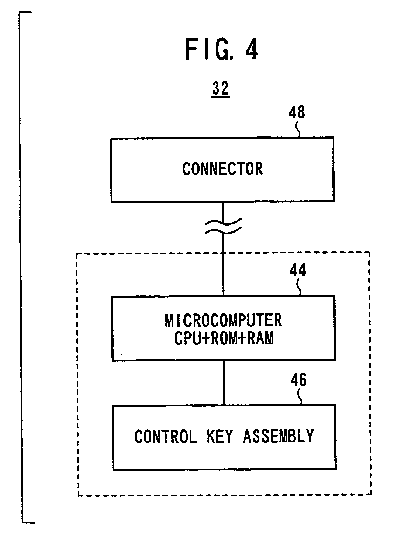

FIG. 4 shows in block form an electric circuit of the manual controller 32 connected to the transaction terminal unit 26. The manual controller 32 has a microcomputer 44 as an overall control device including a CPU, a ROM, and a RAM, and a control key assembly 46 connected to the microcomputer 44 by a switch interface. The microcomputer 44 is connected to a physical connector 48 by a connection interface and a cable for connection to the transaction terminal unit 26.

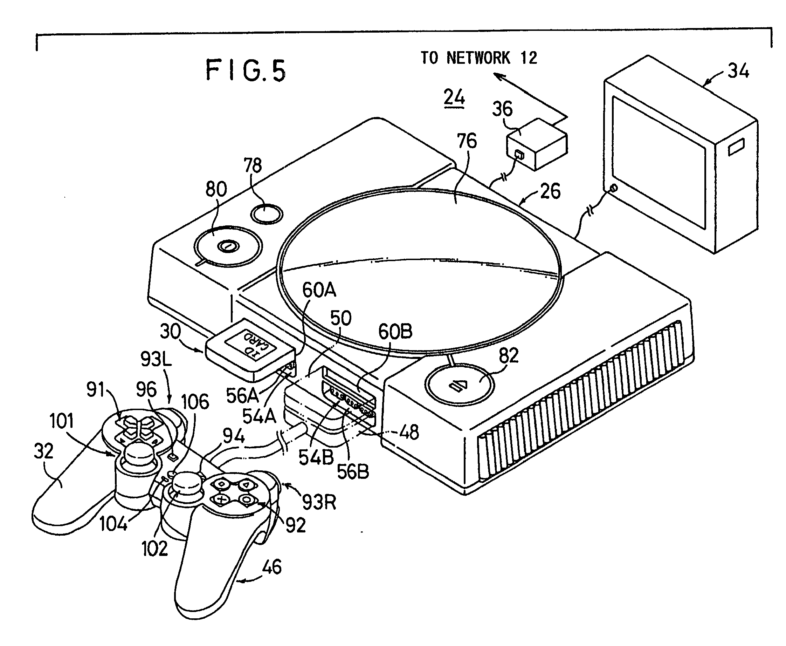

FIG. 5 shows in perspective the transaction terminal 24 in use which includes the network connection device 36, the transaction card 30, the manual controller 32, and a memory card 50.

The transaction terminal 24 includes the transaction terminal unit 26 as an entertainment apparatus which serves as a master unit for the transaction card 30, the manual controller 32 detachably inserted in one of lower insertion units 56A, 56B in slots 54A, 54B defined in a front wall of the transaction terminal unit 26, the transaction card 30 and/or the memory card 50, which serves to record interim data of a game that is being played and content data supplied via the network 12, detachably inserted in one of upper insertion units 60A, 60B in the slots 54A, 54B, the network connection device 36 connected to a connector on a rear wall of the transaction terminal unit 26, and the display monitor 34 such as a television receiver which is supplied with video and audio output signals from the network connection device 36.

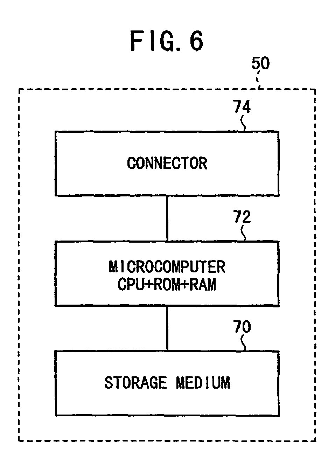

FIG. 6 shows in block form an electric circuit of the memory card 50. The memory card 50 has a storage medium 70 comprising a flash memory having a data storage capacity of 2 MB, for example. The storage medium 70 is connected to a microcomputer 72 as a control device for the memory card 50. The microcomputer 72 has a CPU, a ROM, a RAM, etc., and includes a unit connection interface for connecting the memory card 50 to the transaction terminal unit 26 via a physical connector 74 and a memory interface for connection to the storage medium 70.

As shown in FIG. 5, the transaction terminal unit 26 has a disk loading unit 76 for loading an optical disk 90 such as a CD-ROM for reading recorded data therefrom, a CD-R capable of recording data thereon, a magneto-optical disk capable of rewriting data thereon, or the like, a reset switch 78, a power supply switch 80, and a disk control switch 82 for controlling the loading of the optical disk 90.

The manual controller 32, which is shown as being inserted in the insertion unit 56B of the transaction terminal unit 26 by the connector 48, has first and second control pads 91, 92, an L button 93L, an R button 93R, a start button 94, and a selection button 96. The manual controller 32 also has control pads 101, 102 for making analog control actions, a mode selection switch 104 for selecting control modes of the control pads 101, 102, and an indicator 106 for indicating a selected control mode. The above elements of the manual controller 32, except for the indicator 106, are collectively referred to as the control key assembly 46 (see FIG. 4).

The transaction terminal unit 26 can read a program recorded in the optical disk 90 with the disk loading unit 76, and execute a game, for example, based on the program depending on commands supplied from the user, e.g., the game player, via the manual controller 32, with the assistance of images displayed on and sounds produced by the display monitor 34. The execution of the game mainly represents controlling the progress of the game and the display of images and the generation of sounds. The transaction terminal unit 26 is loaded with a mailer which is software for sending and receiving electronic mail and a browser which is software for browsing WWW sites. Therefore, the transaction terminal unit 26 can access the home page of the content provider's terminal 14 and display images from the home page on the display monitor 34.

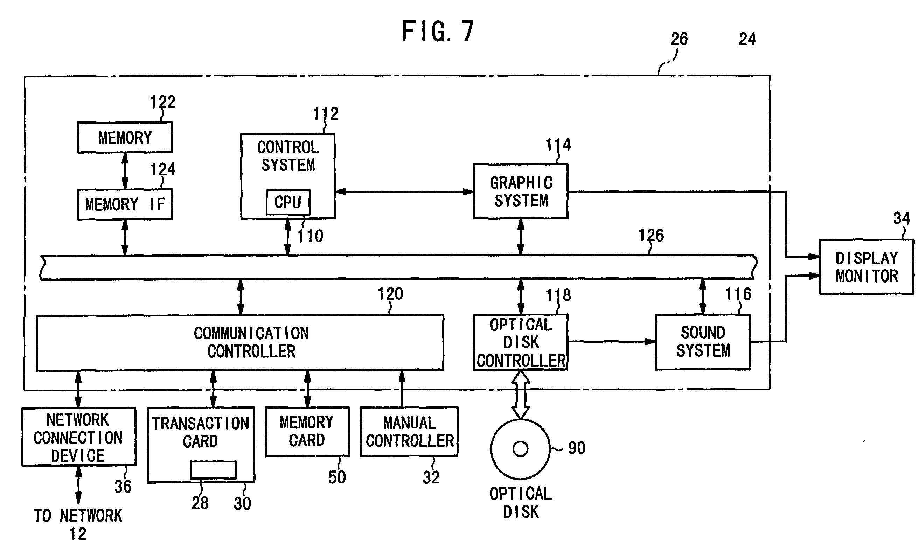

FIG. 7 shows in block form an electric circuit of the transaction terminal 24. As shown in FIG. 7, the transaction terminal unit 26 of the transaction terminal 24 comprises a control system 112 including a central processing unit (CPU) 110 and its peripheral devices, a graphic system 114 including a graphic processing unit (GPU) for generating and storing image data in a frame buffer (not shown), a sound system 116 including a sound processing unit (SPU) for generating music sounds and sound effects, an optical disk controller 118 for controlling an optical disk in which application programs and data are recorded, a communication controller 120 for controlling the transfer of signals from the manual controller 32 for entering commands from the user, and the transfer of data to and from the memory card 50 for storing game settings, the transaction card 30, and the network connection device 36, a data memory 122 having a relatively large data storage capacity of 2 MB, for example, for recording content data from the content provider's terminal 14, etc., and program data, etc. stored in the optical disk 90 via a memory interface 124, and a bus 126 to which the control system 112, the graphic system 114, the sound system 116, the optical disk controller 118, the communication controller 120, and the memory interface 124 are connected. The data memory 122 also functions as a program storage unit for downloading a program as a reader for reading the inherent identification codes Ni from the optical disk 90 or via communications over the network 12.

The control system 112 includes the CPU 110, a peripheral device controller (not shown) for controlling interrupts and direct memory access (DMA) data transfer, a main memory (not shown) comprising a random-access memory (RAM), and a read-only memory (ROM) (not shown) which stores various programs such as an operating system for managing the main memory, the graphic system 114, the sound system 116, etc.

When the transaction terminal unit 26 is turned on, the CPU 110 of the control system 112 executes the operating system stored in the ROM to start controlling the graphic system 114, the sound system 116, etc.

For example, when a program such as a game program is executed, the CPU 110 controls the graphic system 114, the sound system 116, etc. depending on commands entered by the user to control the display of images and the generation of sound effects, music sounds, etc. on the display monitor 34.

The control system 112 also functions as a reader for reading identification codes stored in the storage unit 28 of the transaction card 30 which is inserted in the insertion unit 60A or 60B.

The graphic system 114 comprises a geometry transfer engine (GTE) (not shown) for performing coordinate transformations and other processing, a GPU (not shown) for rendering image data according to rendering instructions from the CPU 110, a frame buffer (not shown) for storing image data rendered by the GPU, and an image decoder (not shown) for decoding image data compressed and encoded by an orthogonal transform such as a discrete cosine transform.

The sound system 116 comprises an SPU (not shown) for generating music sounds, sound effects, etc. based on instructions from the CPU 110, a sound buffer (not shown) for storing waveform data from the SPU, and a speaker (not shown) for outputting music sounds, sound effects, etc. generated by the SPU.

Video output signals from the graphic system 114 and audio output signals from the sound system 116 are supplied to the display monitor 34, which displays images on its display screen and reproduces sounds with its speaker.

The optical disk controller 118 comprises an optical disk drive (not shown) for reproducing programs and data recorded on the optical disk 90, a decoder (not shown) for decoding programs and data that are recorded with an error correcting code added thereto, and a buffer (not shown) for temporarily storing data read from the optical disk drive so as to allow the data from the optical disk 90 to be read at a high speed. An auxiliary CPU (not shown) is connected to the decoder.

The communication controller 120 controls communications of the network connection device 36, the transaction card 30, the memory card 50, and the manual controller 32 with the CPU 110 via the bus 126.

As shown in FIGS. 1 and 2, a transaction management terminal (charge calculating device) 136 comprising a computer unit 130, a display unit 132, and an input device 134 including a mouse and a keyboard is connected to the network 12. To the transaction management terminal 136, there is connected a balance database 138 for recording balances Ci corresponding respectively to the identification codes Ni inherent in respective transaction cards 30. Since each transaction card 30 has its inherent identification code Ni, the transaction card 30 is also referred to as an ID card 30.

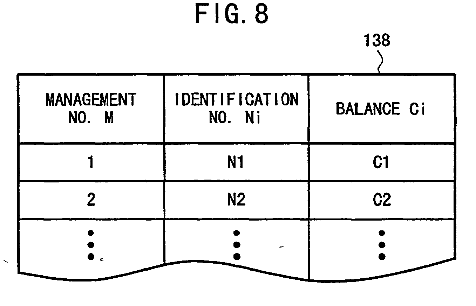

FIG. 8 shows details of the balance database 138 by way of example. The balance database 138 has records of sets of identification codes Ni and balances Ci at respective management numbers M (M = 1, 2, ···). For example, the balance database 138 has a record of an identification code Ni = N1 and a balance Ci = C1 at a management number M = 1.

In this embodiment, as shown in FIG. 1, a transaction card processor (automatic prepayment transaction terminal) 140 is connected to the network 12 next to the transaction management terminal 136. The transaction card processor 140 has a transaction card insertion/discharge slot (transaction card loading unit) 142, a bank note insertion/discharge slot 144 for inserting and discharging a bank note 143, a touch screen 146, doubling as an input unit and a display unit, for the user (which may be the manager of the transaction management terminal 136 or the owner of the transaction card 30) to send a signal by touching the display area of the display unit with a finger, and a speaker for announcing (guiding) a transaction status or the like.

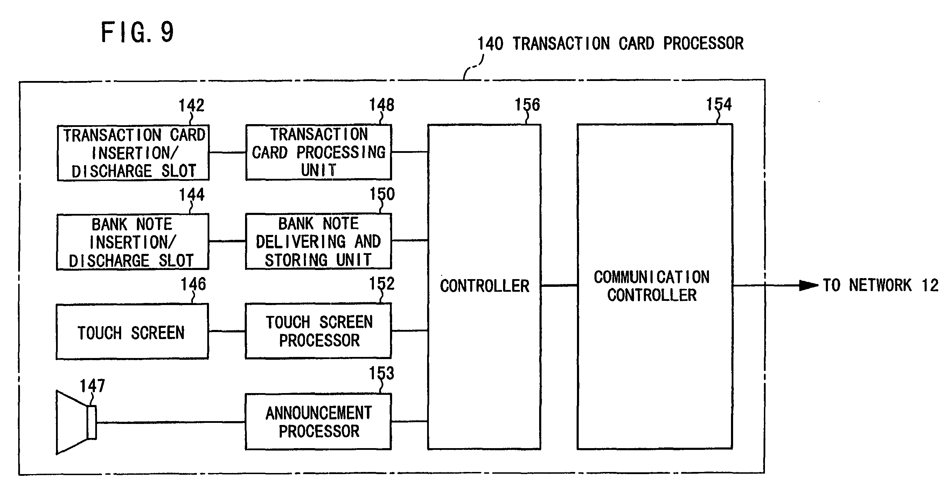

FIG. 9 shows in block form an electric circuit of the transaction card processor 140 which has a plurality of CPUs. The transaction card processor 140 comprises a transaction card processing unit (identification reader and writer) 148 for reading data from and writing data in the storage unit 28 of the transaction card 30 which has been inserted from the transaction card insertion/discharge slot 142, a bank note delivering and storing unit (prepayment confirming unit) 150 for determining the type of a bank note which has been inserted into the bank note insertion/discharge slot 144, delivering changes, and storing the inserted bank note, a touch screen processor 152 for reading data entered through and displaying data on the touch screen 146, an announcement processor 153 for outputting announcement sounds via the speaker 147, and a controller 156 for controlling the processors 148, 150, 152, 153 and communicating with the transaction management terminal 136 via a communication controller 154 and the network 12. The controller 156 also functions as a balance updating confirming unit. The transaction card processor 140 is similar to an automatic teller machine (ATM) capable of performing banking services such as cash deposit and withdrawal.

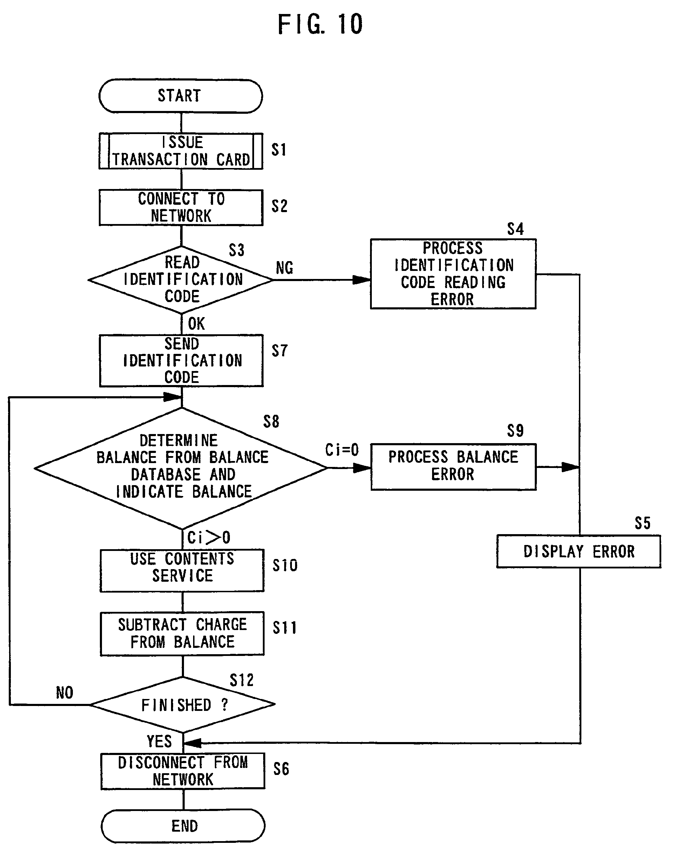

Operation of the electronic settlement system described above will be described in detail below with reference to FIG. 10.

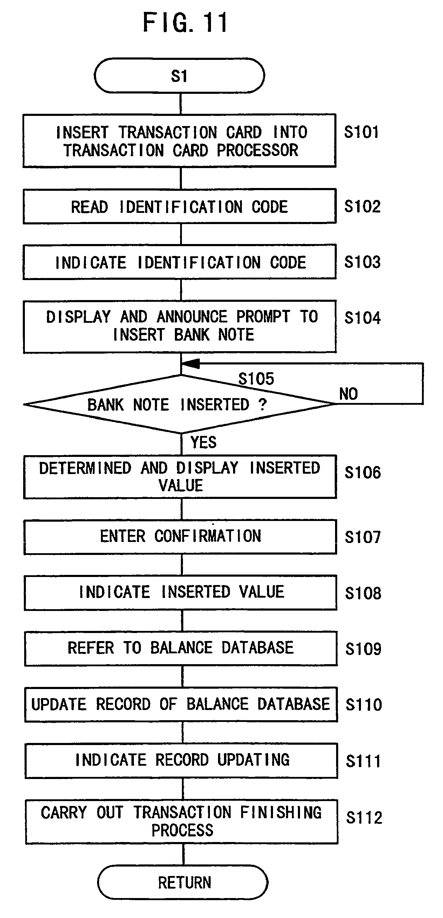

In step S1, the transaction card processor 140 as the automatic prepayment transaction terminal) issues a transaction card 30 which has been prepaid as a cash card. Details of the process of issuing the transaction card 30 in step S1 are shown in FIG. 11.

As with an existing an ATM, when the user stands in front of the transaction card processor 140, a sensor in the transaction card processor 140 detects the user, and the transaction card processor 140 announces a transaction procedure through the speaker 147 independently of or in synchronism with data displayed on the touch screen 146.

The user inserts the transaction card 30 with the inherent identification code Ni into the transaction card processor 140 through the transaction card insertion/discharge slot 120 in step S101.

The user can purchase the original transaction card 30 with the inherent identification code Ni as a prepaid card in a general shop such as a convenience store or the like. While the user can purchase such a transaction card 30 as a prepaid card with a prepayment, the process shown in FIG. 11 will be described as a process of reusing the transaction card 30, i.e., a process of refilling the transaction card 30 for recycling.

In step S102, the transaction card processing unit 148 reads the inherent identification code Ni of the transaction card 30. In step S103, the read inherent identification code Ni is indicated to the transaction management terminal 136 via the controller 156, the communication controller 154, and the network 12.

The transaction management terminal 136 searches the balance database 138 for the inherent identification code Ni. When the transaction management terminal 136 finds the inherent identification code Ni, the transaction management terminal 136 indicates the inherent identification code Ni to the transaction card processor 140.

In step S104, the touch screen 146 displays a prompt for the user to insert a bank note, and the speaker 147 synchronously announces a prompt for the user to insert a bank note.

If the user inserts a bank note of 1000 yen, 3000 yen, or 5000 yen through the bank note insertion/discharge slot 144 in response to the prompt (YES in step S105), then the bank note delivering and storing unit 150 determines the value of the inserted bank note, and the touch screen processor 152 displays the inserted value Ca on the touch screen 146 to indicate the inserted value Ca to the user.

In step S107, the user enters input data via the touch screen 146 to confirm the value of the inserted bank note. In step S108, the inserted value Ca is indicated to the transaction management terminal 136 via the touch screen controller 152, the controller 156, the communication controller 154, and the network 12.

The transaction management terminal 136 refers to (searches) the balance database 138 to read the balance Ci from the record of the identification code Ci in step S109. In step S110, the transaction management terminal 136 adds the inserted value Ca to the balance Ci and updates the record in the balance database 138 with the new balance Ci. In this manner, when the user inserts the transaction card 30 with the inherent identification code Ni into the transaction card processor 140 through the transaction card insertion/discharge slot 120, the inherent identification code Ni is recognized, and when the charge is prepaid, the corresponding record in the balance database 138 is updated depending on the inserted value Ca. Therefore, the transaction card 30 can be refilled and hence can be recycled as many times as desired. The transaction card 30 whose balance Ci in the balance database 138 is zero can be manufactured at a much less cost than 1000 yen.

In step S111, the updating of the record in the balance database 138 is indicated to the controller 156, which also functions as the balance updating confirming unit, via the transaction management terminal (balance management terminal) 136 which also functions as a balance database updating means, the network 12, and the communication controller 154 of the transaction card processor 140. Then, a process of finishing the transaction procedure is carried out in step S112. In the process of finishing the transaction procedure, the touch screen 146 displays a message indicating that the transaction card 30 has been refilled, i.e., the inserted value Ca has been prepaid, and the transaction card 30 is discharged from the transaction card insertion/discharge slot 142. A receipt with the transaction recorded thereon may be issued together with the transaction card 30.

In this fashion, the transaction card 30 is issued as a prepaid card after the charge has been prepaid. Then, control proceeds from step S1 to step S2 shown in FIG. 10.

When the user inserts the issued transaction card 30 with the balance Ci which the user considers as registered or updated into the transaction terminal unit 26 to use the transaction card 30 at home or the like, the display monitor 34 display a guidance message, and the user operates the manual controller 32 to connect the transaction terminal unit 26 via the network connection device 36 to the network 12 in step S2.

A program for performing transactions on the network 12 using the transaction card 30 may be downloaded in advance from the optical disk 90 via the optical disk controller 118 into the data memory 122. Of course, such a program may be downloaded from the transaction management terminal 136 or the content provider's terminal 14 via the network 12 into the data memory 122.

In step S3, the CPU 110 of the control system 112 reads the inherent identification code Ni stored in the storage unit 28 of the transaction card 30. If the CPU 110 fails to read the identification code Ni, then an identification code reading error is processed in step S4, and displayed on the display monitor 34 in step S5, after which the transaction terminal unit 26 is disconnected from the network 12 in step S6.

If the CPU 110 can properly read the identification code Ni in step S3, then the transaction terminal unit 26 indicates (sends) the identification code Ni via the network connection device 36 and the network 12 to the transaction management terminal 136 in step S7.

In step S8, the transaction management terminal 136 searches the balance database 138, reads the record of the balance Ci corresponding to the identification code Ni, and indicates the balance Ci to the transaction terminal 24.

If the balance Ci is zero, then the transaction terminal unit 26 processes a balance error in step S9, displays a message that the balance Ci is zero on the display monitor 34 in step S5, and is disconnected from the network 12 in step S6.

If the balance Ci is greater than zero, then the transaction management terminal 136 displays the balance Ci on the display monitor 34 of the transaction terminal 24 in which the transaction card 30 is inserted, and displays a message for allowing the user to use a contents service in step S10.

When fee-charging contents in the content database 16 are used by the transaction terminal 24 via the content provider's terminal 14, e.g., when software as contents is downloaded into the data memory 122 of the transaction terminal unit 26, the transaction is managed by the transaction management terminal 136, and the balance database 138 for the identification code Ni is updated and the charge for the use of the contents is subtracted from the balance Ci in step S11.

In step S12, the transaction management terminal 136 asks the user if the content service is to be finished or not with a message displayed on the display monitor 34 of the transaction terminal 24. If the content service is to be continued, then control goes back to step S8. If the user enters a command to finish the content service for the transaction terminal 24 in step S12, then the transaction terminal unit 26 is disconnected from the network 12 in step S6.

In the above embodiment, as described above, since the inherent identification code Ni written in the transaction card 30 is read by the control system 112 which functions as the identification code reader of the transaction terminal 24, the user is not required to manually enter the inherent identification code Ni. A program for reading the inherent identification code Ni from the storage unit 28 of the transaction card 30 may be downloaded into the data memory 122 of the transaction terminal 24 from an external source, e.g., the optical disk 90 or the transaction management terminal 136 of the network 12.

Unlike a credit card, the transaction card 30 can be owned by a child. Therefore, almost anybody can electrically settle charges on the network 12.

When the transaction card 30 and a bank note are inserted into the transaction card processor 140, the balance database 138 is updated by the transaction management terminal 136 via the network 12. Therefore, the transaction card 30 can be refilled, or stated otherwise, can be recycled.

Since only the inherent identification code Ni, but not the balance Ci, is stored in the storage unit 28 of the transaction card 30, the balance Ci for the transaction card 30 cannot be tampered with in principle.

The balance Ci for the transaction card 30 is updated in the balance database 138 connected to the network 12 when the transaction card 30 with the inherent identification code Ni is inserted into the transaction card processor 140 and the charge is prepaid with a bank note. Consequently, if a plurality of transaction card processors 140 are installed at suitable spots with appropriate security, the transaction card 30 can be used highly conveniently. Inasmuch as the transaction card processor 140 and an existing ATM share many functions, it is possible to manufacture a single apparatus which is a combination of a transaction card processor and an existing ATM.

As described above, embodiments of the present invention offer many advantages. For example, an identification code is recorded in a transaction card, and when the transaction card is inserted into the transaction terminal, the transaction terminal reads the identification code. Thus, the user is not required to manually enter a card number when using the transaction card.

Since the transaction card is obtained upon a cash prepayment, the transaction card can be used by children as well as adults.

Even if the balance for the transaction card is zero, the balance database thereof is updated when a new charge is prepaid, making the transaction card reusable. Accordingly, the transaction card can be recycled at a low cost.

Furthermore, the electronic settlement system according to embodiments of the present invention can rely on a substantial part of the existing infrastructure, and the transaction card itself does not need a so-called IC chip as is the case with electronic money. Therefore, the electronic settlement system is capable of electronically settling charges on the network highly inexpensively.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the claimed invention.

## Claims

1. An electronic settlement system (10) comprising:
a non-local network (12) to which a content provider's terminal (14) is connected;
a transaction card (30) issued as a prepaid card and having an inherent identification code (Ni) written therein;
a transaction management terminal (136) connected to said network, for accessing a database (138) containing a balance (Ci) corresponding to said inherent identification code;
a transaction terminal (24) having a transaction card insertion unit (60), a reader (112) for reading said inherent identification code, and a network connector (36), for reading said inherent identification code from said prepaid transaction card via said transaction card insertion unit with said reader, and sending the inherent identification code via said network connector (36) and said network (12) to said transaction management terminal (136);
the arrangement being such that when said network (12) is accessed via said transaction terminal (24) with said prepaid transaction card (30) inserted in said transaction card insertion unit (60) and content data is used via said content provider's terminal (14), said transaction management terminal (136) updates the balance recorded in said database (138) with respect to the inherent identification code of said prepaid transaction card depending on a charge for said content data; and
an automatic prepayment transaction terminal (140) which is combined in a single apparatus with an automatic teller machine capable of performing banking services and is connected to said network (12) for communication with said transaction management terminal (136), said automatic prepayment transaction terminal (140) having a transaction card loading unit (142) for loading said transaction card (30), a reader (148) for reading the inherent identification code of the transaction card loaded in said transaction card loading unit, a prepayment confirming unit (150), and a balance updating confirming unit (156);
the arrangement being such that when said prepayment confirming unit (150) confirms the prepayment of a charge, said reader (148) reads the inherent identification code of the transaction card loaded in said transaction card loading unit (142), said automatic prepayment transaction terminal (140) communicates with said transaction management terminal (136) via the network (12), and sends a request to said transaction management terminal to update the balance for the read inherent identification code depending on the prepaid charge in said database;
that based on said request, said transaction management terminal (136) updates the balance for the read inherent identification code in said database (138), and indicates the updating of the balance to said automatic prepayment transaction terminal (140); and
that said automatic prepayment transaction terminal (140) confirms the indicated updating of the balance with said balance updating confirming unit (156).

2. An electronic settlement system according to claim 1, wherein said transaction card (30) issued as a prepaid card has a machine-readable storage unit (28), said storage unit (28) recording said inherent identification code (Ni).

3. An electronic settlement system according to claim 1 or claim 2, wherein said transaction terminal (24) comprises a program storage unit (122), the arrangement such that a program functioning as a reader for reading said inherent identification code is downloaded from an external source into said program storage unit.

4. An electronic settlement system according to claim 1, claim 2 or claim 3, wherein said transaction terminal (24) comprises an entertainment apparatus (26) capable of executing a program based on a command from a manual controller (32).

5. An electronic settlement system according to any one of the preceding claims, wherein said non-local network (12) comprises a broadcast network, a communication network, a circuit network or the Internet.

## Patentansprüche

1. Elektronisches Begleichungssystem (10), welches aufweist:
ein nichtlokales Netzwerk (12), mit dem ein Endgerät (14) eines Inhaltsproviders verbunden ist;
eine Transaktionskarte (30), welche als vorausbezahlte Karte ausgegeben wird und auf die ein anhaftender Identifikationscode (Ni) geschrieben ist;
ein Transaktionsverwaltungsendgerät (136), welches mit dem Netzwerk verbunden ist, um auf eine Datenbank (138) zuzugreifen, welche einen Kontostand (Ci) enthält, der dem anhaftenden Identifikationscode entspricht;
ein Transaktionsendgerät (24), welches eine Transaktionskarten-Einführungseinheit (60), ein Lesegerät (112) zum Lesen des anhaftenden Identifikationscodes und einen Netzwerkverbinder (36) hat, um den anhaftenden Identifikationscode von der vorausbezahlten Transaktionskarte über die Transaktionskarten-Einführungseinheit mit dem Lesegerät zu lesen, und zum Senden des anhaftenden Identifikationscode über den Netzwerkverbinder (36) und das Netzwerk (12) zum Transaktionsverwaltungsendgerät (136);
wobei die Anordnung derart ist, dass, wenn auf das Netzwerk (12) über das Transaktionsendgeräts (24) mit der vorausbezahlten Transaktionskarte (30) zugegriffen wird, welche in die Transaktionskarten-Einführungseinheit (60) eingeführt ist und Inhaltsdaten über das Endgerät (14) des Inhaltsproviders verwendet werden, das Transaktionsverwaltungsendgerät (136) den Kontostand, der in der Datenbank (138) aufgezeichnet ist, in Bezug auf den anhaftenden Identifikationscode der vorausbezahlten Transaktionskarte in Abhängigkeit von einer Gebühr für die Inhaltsdaten aktualisiert; und
ein automatisches Vorausbezahlungs-Transaktionsendgerät (140), welches zu einer einzelnen Vorrichtung mit einem automatischen Zähler kombiniert ist, das in der Lage ist, Bankdienste durchzuführen und mit dem Netzwerk (12) zur Kommunikation mit dem Transaktionsverwaltungsendgerät (136) verbunden ist, wobei das automatische Vorausbezahlungs-Transaktionsendgerät (140) eine Transaktionskarten-Ladeeinheit (142), um die Transaktionskarte (30) zu laden, eine Leseeinrichtung (148), um den anhaftenden Identifikationscode der Transaktionskarte, welche in die Transaktionskarten-Ladeeinheit geladen ist, zu lesen, eine Vorausbezahlungsbestätigungseinheit (150), und eine Kontostand-Aktualisierungsbestätigungseinheit (156) hat;
wobei die Anordnung derart ist, dass, wenn die Vorausbezahlungsbestätigungseinheit (150) die Vorausbezahlung einer Gebühr bestätigt, die Leseeinrichtung (148) den anhaftenden Identifikationscode der Transaktionskarte liest, welche in die Transaktionskarten-Ladeeinheit (152) geladen ist, das automatische Vorausbezahlungs-Transaktionsendgeräts (140) mit dem Transaktionsverwaltungsendgerät (136) über das Netzwerk (12) kommuniziert und eine Anfrage an das Transaktionsverwaltungsendgerät sendet, um den Kontostand für den gelesenen anhaftenden Identifikationscode in Abhängigkeit von der vorausgezahlten Gebühr in der Datenbank zu aktualisieren;
dass auf Basis dieser Anforderung das Transaktionsverwaltungsendgerät (136) den Kontostand für den gelesenen anhaftenden Identifikationscode in der Datenbank (138) aktualisiert und die Aktualisierung des Kontostands dem automatischen Vorausbezahlungs- Transaktionsendgeräts (140) anzeigt; und
dass das automatische Vorausbezahlungs-Transaktionsendgerät (140) die angezeigte Aktualisierung des Kontostands mit der Kontostandaktualisierungs-Bestätigungseinheit (156) bestätigt.

2. Elektronisches Begleichungssystem nach Anspruch 1, wobei die Transaktionskarte (30), die als Vorausbezahlungskarte ausgegeben wird, eine maschinen-lesebare Speichereinheit (28) hat, wobei die Speichereinheit (28) den anhaftenden Identifikationscode (Ni) aufzeichnet.

3. Elektronisches Begleichungssystem nach Anspruch 1 oder 2, wobei das Transaktionsendgerät (24) eine Programmspeichereinheit (122) aufweist, wobei die Anordnung derart ist, dass ein Programm, welches als eine Leseeinrichtung zum Lesen des anhaftenden Identifikationscodes arbeitet, von einer externen Quelle in die Programmspeichereinheit heruntergeladen wird.

4. Elektronisches Begleichungssystem nach Anspruch 1, 2 oder 3, wobei das Transaktionsendgerät (24) eine Unterhaltungsvornchtung (26) aufweist, die in der Lage ist, ein Programm auf Basis eines Befehls von einer manuellen Steuerung (32) auszuführen.

5. Elektronisches Begleichungssystem nach einem der vorhergehenden Ansprüche, wobei das nichtlokale Netzwerk (12) ein Rundfunknetzwerk, ein Kommunikationsnetzwerk, ein Schaltungsnetzwerk oder das Internet aufweist.

## Revendications

1. Système de règlement électronique (10) comprenant :
un réseau non local (12) sur lequel un terminal de fournisseur de contenu (14) est connecté ;
une carte de transaction (30) qui est délivrée en tant que carte prépayée et qui comporte un code d'identification inhérent (Ni) écrit dedans;
un terminal de gestion de transaction (136) qui est connecté audit réseau, pour accéder à une base de données (138) qui contient un solde (Ci) qui correspond audit code d'identification inhérent ;
un terminal de transaction (24) qui comporte une unité d'insertion de carte de transaction (60), un lecteur (112) pour lire ledit code d'identification inhérent et un connecteur de réseau (36), pour lire ledit code d'identification inhérent à partir de ladite carte de transaction prépayée via ladite unité d'insertion de carte de transaction à l'aide dudit lecteur et pour envoyer le code d'identification inhérent via ledit connecteur de réseau (36) et ledit réseau (12) audit terminal de gestion de transaction (136),
l'agencement étant tel que lorsque ledit réseau (12) est accédé via ledit terminal de transaction (24) tandis que ladite carte de transaction prépayée (30) est insérée dans ladite unité d'insertion de carte de transaction (60) et que des données de contenu sont utilisées via ledit terminal de fournisseur de contenu (14), ledit terminal de gestion de transaction (136) met à jour le solde qui est enregistré dans ladite base de données (138) en relation avec le code d'identification inhérent de ladite carte de transaction prépayée en fonction d'une imputation pour lesdites données de contenu ; et
un terminal de transaction de prépaiement automatique (140) qui est combiné selon un unique appareil avec une machine de vente automatique permettant de réaliser des services bancaires et qui est connecté audit réseau (12) pour une communication avec ledit terminal de gestion de transaction (136), ledit terminal de transaction de prépaiement automatique (140) disposant d'une unité de chargement de carte de transaction (142) pour charger ladite carte de transaction (30), d'un lecteur (148) pour lire le code d'identification inhérent de la carte de transaction qui est chargée dans ladite unité de chargement de carte de transaction, d'une unité de confirmation de prépaiement (150) et d'une unité de confirmation de mise à jour de solde (156),
l'agencement étant tel que lorsque ladite unité de confirmation de prépaiement (150) confirme le prépaiement d'une imputation, ledit lecteur (148) lit le code d'identification inhérent de la carte de transaction qui est chargée dans ladite unité de chargement de carte de transaction (142), ledit terminal de transaction de prépaiement automatique (140) communique avec ledit terminal de gestion de transaction (136) via le réseau (12) et envoie une requête audit terminal de gestion de transaction afin de mettre à jour le solde pour le code d'identification inhérent lu en fonction de l'imputation prépayée dans ladite base de données ;
sur la base de ladite requête, ledit terminal de gestion de transaction (136) met à jour le solde pour le code d'identification inhérent lu dans ladite base de données (138) et indique la mise à jour du solde audit terminal de transaction de prépaiement automatique (140) ; et
ledit terminal de transaction de prépaiement automatique (140) confirme la mise à jour indiquée du solde avec ladite unité de confirmation de mise à jour de solde (156).

2. Système de règlement électronique selon la revendication 1, dans lequel ladite carte de transaction (30) qui est délivrée en tant que carte prépayée comporte une unité de stockage lisible par machine (28), ladite unité de stockage (28) enregistrant ledit code d'identification inhérent (Ni).

3. Système de règlement électronique selon la revendication 1 ou 2, dans lequel ledit terminal de transaction (24) comprend une unité de stockage de programme (122), l'agencement étant tel qu'un programme qui fonctionne en tant que lecteur pour lire ledit code d'identification inhérent est déchargé depuis une source externe à l'intérieur de ladite unité de stockage de programme.

4. Système de règlement électronique selon la revendication 1, 2 ou 3, dans lequel ledit terminal de transaction (24) comprend un appareil de loisir (26) susceptible d'exécuter un programme sur la base d'une commande en provenance d'un contrôleur manuel (32).

5. Système de règlement électronique selon l'une quelconque des revendications précédentes, dans lequel ledit réseau non local (12) comprend un réseau de diffusion, un réseau de communication, un réseau de circuit ou l'Internet.
